# EUROPEAN PATENT SPECIFICATION

(11) **EP 3 933 491 B1**
(45) Date of publication and mention of the grant of the patent: **13.08.2025**
(21) Application number: 20763775.2
(22) Date of filing: 26.02.2020
(51) Int. Cl.: G02C 7/00, G02C 13/00

(54) **VISUAL INFORMATION CHANGING DEVICE, PRISM GLASSES**
VORRICHTUNG ZUR ÄNDERUNG OPTISCHER INFORMATIONEN, PRISMENBRILLE
DISPOSITIF DE CHANGEMENT D'INFORMATIONS VISUELLES, LUNETTES PRISMATIQUES

(30) Priority: 27.02.2019 WO PCT/JP2019/007711
(43) Date of publication of application: 05.01.2022
(73) Proprietor: Frozen Capsule Co., Ltd., Yokohama-shi, Kanagawa 236-0016 (JP)
(72) Inventor: TANAKA Kazuhisa, Kawasaki-shi, Kanagawa 213-0006 (JP); KANDA Yasushi, Osaka-shi, Osaka 542-0012 (JP)
(74) Representative: AWA Sweden AB
(86) International application number: PCT/JP2020/007874
(87) International publication number: WO 2020/175591

(56) References cited:
- GB-A- 2 338 077
- JP-A- 2009 092 946
- JP-A- 2011 242 736
- JP-A- 2017 181 670
- JP-A- H02 242 221
- JP-A- S4 995 635
- JP-U- 3 067 405
- JP-U- 3 116 154
- JP-U- 3 217 739
- JP-U- S5 652 721
- JP-U- S60 191 023
- US-A- 5 452 030
- US-A1- 2008 137 033
- US-A1- 2008 198 322
- US-A1- 2010 315 587
- US-A1- 2011 194 071

## Description

### BACKGROUND OF THE INVENTION

### 1. Field of the Invention

The present invention relates to prism glasses and a method for selecting lenses in the prism glasses.

### 2. Description of Related Art

Prism glasses have been known to utilize the property of prism lenses to refract incident light conventionally. As the prism glasses, Japanese Laid-Open Patent Publication No. 2017-116892 discloses a configuration in which prism lenses are used to refract incident light such that both left and right gazes are drawn inward in the left-right direction to reduce eye strain caused by obliquity, weakness of eye muscles, or insufficient muscle strength, for example.

US 2011/194071 A1 relates to variable prism eyeglasses. And US 2008/137033 A1 relates to a progressive enhanced visual field prism. A further example of rotating prisms in eyeglasses is disclosed in US5452030A.

### SUMMARY OF THE INVENTION

Conventional prism glasses only work on the ease of view (visibility) when the wearer views the object, and do not work on the effect of the visual information received through the view on the brain, body, and mental state of the wearer.

It is an object of the present invention to provide a visual information changing device capable of adjusting the effect of visual information received through the view on the brain, body, and mental state of the wearer. The invention is defined by the appended claims.

To solve the above problem, the visual information changing device according to the present invention is worn to cover the eyes of the wearer, changes the direction of light from the external world, and inputs it to the eyes of the wearer.

The visual information changing device may be configured by a prism structure.

A visual information changing device may include: an imaging unit that captures an image using light from the external world; a processor that performs coordinate transformation process on the image data captured by the imaging unit to generate coordinate transformation data, and a display that displays the coordinate transformation data generated by the processor.

A prism structure includes: a frame; and two prism lenses arranged side by side in a left-right direction on the frame and refracting incident light incident on each of them in the same direction.

The refractive angle of each prism lens may be from 0.5° to 20°.

The prism lenses may be transparent in color.

The refractive angles in the two prism lenses may be the same with each other.

The two prism lenses may be thicker from a lower portion to an upper portion.

The two prism lenses may be thicker from the upper portion to the lower portion.

The two prism lenses may be thicker from the right side to the left side as viewed by the wearer when used by the wearer.

The two prism lenses may be thicker from the left side to the right side as viewed by the wearer when used by the wearer.

A method for selecting lenses in prism glasses including a frame; and two lenses arranged side by side in a left-right direction on the frame, which lenses refract incident light incident on each of them in the same direction, where the method includes the steps of: identifying a direction of eyeball immobility, which corresponds to a direction in which it is difficult to move eyeballs in a case where a subject moves only the eyeballs up, down, left and right while maintaining a mid-stance posture during walking; and selecting prism lenses that facilitate movement of the eyeballs in the direction of eyeball immobility identified in the step of identifying the direction of eyeball immobility.

In the prism glasses according to the present invention, two prism lenses allow incident light incident into each of them to refract in the same direction. This changes the visual information input into the brain of the wearer through vision, and in turn changes the spatial perception of the wearer to allow the effect of visual information on the brain and body of the wearer to be adjusted.

### BRIEF DESCRIPTION OF THE DRAWINGS

FIG. 1 a diagram illustrating an appearance of the prism glasses;
FIG. 2 is a diagram illustrating a refraction of incident light in prism glasses (prism structure) as a visual information changing device according to a first unclaimed embodiment of the present invention;
FIG. 3 is a diagram illustrating a refraction of incident light in prism glasses according to a second unclaimed embodiment of the present invention;
FIG. 4 is a diagram illustrating a refraction of incident light in prism glasses according to a third unclaimed embodiment of the present invention;
FIG. 5 is a diagram illustrating a refraction of incident light in prism glasses according to a fourth unclaimed embodiment of the present invention;
FIG. 6 is a diagram illustrating a first posture in a method for selecting the prism lenses;
FIG. 7 is a diagram illustrating a second posture in the method for selecting the prism lenses;
FIG. 8 is a diagram illustrating a prism structure according to a first variation of the present invention;
FIG. 9 is a diagram illustrating a prism structure according to a second variation of the present invention;
FIG. 10 is a diagram illustrating an appearance of a visual information changing device according to a fifth unclaimed embodiment of the present invention;
FIG. 11 is a diagram illustrating a display of the visual information changing device shown in FIG. 10;
FIG. 12 is a block diagram illustrating a configuration of the visual information changing device shown in FIG. 10;
FIG. 13 is a diagram illustrating a state in which the visual information changing device shown in FIG. 10 is used;
FIG. 14A is a perspective view illustrating an example of prism lens glasses;
FIG. 14B is a top view of the prism lens glasses;
FIG. 14C is a top view of the prism lens glasses, illustrating the prism lenses being rotated;
FIG. 14D is a top view of the prism lens glasses after rotation;
FIG. 15A is an enlarged cross-sectional view of the connecting portion between the front portion and each prism lens of the prism lens glasses by a screw;
FIG. 15B is a perspective view illustrating a prism lens;
FIG. 15C is a side view illustrating the prism lens;
FIG. 15D is an enlarged perspective view of the front portion of prism lens glasses;
FIG. 16A is a side view illustrating the prism lens glasses;
FIG. 16B is a top view of the prism lens glasses, illustrating the prism lenses being rotated;
FIG. 16C is a side view illustrating the prism lens glasses after the rotation;
FIG. 17A is a diagram illustrating the prism lens glasses in which the prism lenses and front portions are formed in rectangle;
FIG. 17B is a diagram illustrating the prism lenses being horizontally rotated;
FIG. 17C is a diagram illustrating the prism lenses being vertically rotated;
FIG. 18A is a perspective view illustrating an example of prism lens glasses that can be used in any vertical direction;
FIG. 18B is a rear view illustrating an example of prism lens glasses viewed from the wearer side;
FIG. 18C is a cross-sectional view illustrating the prism lens;
FIG. 18D is a side view illustrating a nose pad portion of the prism lens glasses;
FIG. 19A is a diagram illustrating another example of nose pads;
FIGS. 19B, 19C, and 19D show another example of the nose pads, where the nose pads are configured to be rotatable with respect to the bridge;
FIG. 20A is a perspective view illustrating an example of prism lens glasses;
FIG. 20B is a cross-sectional view of the lens portion viewed from the side of the prism lens glasses;
FIG. 20C is an exploded perspective view of the front portion of prism lens glasses;
FIG. 20D is a front view of the receiving side front portion of the prism lens glasses; and
FIG. 21 is a perspective view illustrating another form of bezel-type prism lens glasses.

### DETAILED DESCRIPTION OF EMBODIMENT

### (First unclaimed Embodiment)

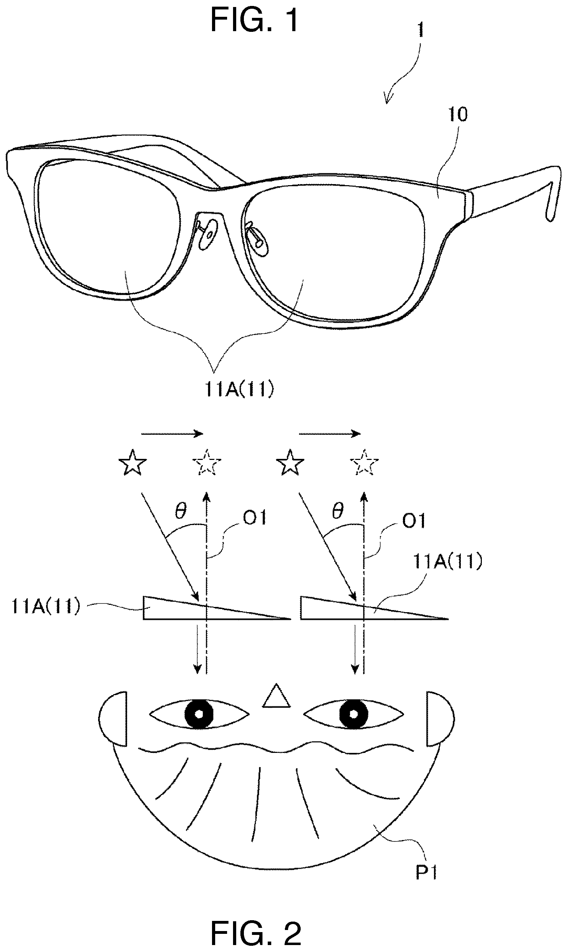

Prism glasses 1 as a visual information changing device according to a first unclaimed embodiment of the present invention will be described with reference to FIGS. 1 and 2. FIG. 1 is a diagram illustrating an appearance of the prism glasses 1 according to the present invention, and FIG. 2 is a diagram illustrating a refraction of incident light in the prism glasses 1 according to a first unclaimed embodiment of the present invention.

The visual information changing device is worn over the eyes of the wearer and includes a function of changing the direction of light from the external world and inputting the light into the eyes of the wearer. In this embodiment, the visual information changing device is configured by a prism structure, especially prism glasses. In this description, a prism structure refers to a structure that has a property of refracting light, such as a prism lens.

As shown in FIG. 1, prism glasses 1 as a prism structure according to the present embodiment includes a frame 10 and two prism lenses 11 arranged side by side in the left and right direction on the frame 10 to refract incident light incident on each of them in the same direction.

The refractive angles in the two prism lenses 11 are the same with each other. As shown in FIG. 2, a refractive angle of the lens is directed to a refractive angle of the light incident on the lens, and refers to an angle θ between the light incident on the lens and the light emitted from the lens. The refractive angle of each prism lens 11 is assumed to be from 0.5° to 20°, and preferably be especially from 0.5° to 2°. In the prism lens 11, the surface on the wearer side is flat, and the surface on the front side of the wearer is inclined with respect to the flat surface. This monotonously increases or decreases the thickness of the prism lens.

The prism lenses 11 are distinguished into base-left prisms 11A, base-right prisms 11B, base-down prisms 11C, and base-up prisms 11D depending on the direction to be refracted. In this first unclaimed embodiment, the base-left prisms 11A will be described.

The prism lenses 11 may be colorless or transparent, or it may be colored. For example, when the prism lenses 11 are made red transparent, it may be expected to stimulate the secretion of adrenaline by allowing the sympathetic nerves of the wearer P1 (see FIG. 2) dominant over the parasympathetic nerves. In addition, this secretion of adrenaline increases the pulse and respiratory rate of the wearer P1. This is expected to increase the sensible temperature and improve blood flow. Accordingly, it is recommended when the body feels cold, needs more energy and confidence, and wishes to be more energetic.

In addition, for example, when the prism lenses 11 are made yellow transparent, the left brain of the wearer P1 is stimulated to be improved. This leads to positive thinking and improves communication skills, and is recommended, for example, when standing in front of others. In addition, it may be expected to increase the movement of the digestive system, improving appetite, for example. This is because it effects on the endocrine system to stimulate the secretion of growth hormone.

In addition, for example, when the prism lenses 11 are made green transparent, the color becomes intermediate between warm and cold colors, achieving a sense of calmness and security due to less stimulation. In addition, green has long been believed to have a restorative effect on the eyes, and viewing forward through the green transparent prism lenses is expected to reduce fatigue.

In addition, for example, when the prism lenses 11 are made blue transparent, it is expected to allow the parasympathetic nervous system to be dominant and to calm the excitement of the nerves. This is expected to lower blood pressure, pulse rate, and body temperature and relax the body and mind. It is recommended if the wearer P1 suffers from insomnia, or if the wearer P1 wishes to improve her/his ability to make calm judgments and observations, and face things carefully.

In addition, for example, when the prism lenses 11 are made pink transparent, it is expected to promote secretion of female hormones. Accordingly, it is recommended if the wearer P1 wishes to feel feminine, if the wearer P1 is in love, or if the wearer P1 is suffering from gynecological problems. In addition, for example, when the prism lenses 11 are made purple transparent, it is a color mixture of two colors, i.e., red and blue, that have significantly different tones, and it serves to improve healing power and intuition, and is recommended when the mind is in a conflicted state.

As shown in FIG. 2, in the present embodiment, the two prism lenses 11 are thicker from the right side to the left side as viewed by the wearer P1 when the wearer P1 uses them. The prism lenses 11 are called base-left prisms 11A. In the case of the base-left prisms 11A, the visual information of the wearer P1 is input in a state in which the visual information is shifted to the right side more than the actual space. This promotes the rotational movement of the eyeballs in the right direction.

To describe this point in detail, since the gaze leads the walking motion, when the target object moves to the right side, the walking motion in the right direction is promoted and the eyeballs rotate to the right side. The function of acquiring visual information about where the user is going and the function of accurately controlling trunk rotation by using the information about how much the user has moved her/his eyes (rotational movement of the eyes) to look in that direction are important. That is, a person walks using various information acquired from the vision in the unconsciousness. In addition, a fact that these changes change the optic flow is directed to a fact that the gait changes. As the gait changes, it may be expected to reconstruct the internal and external loops.

In addition, in the body of the wearer P1, the right weighting is promoted when she/he walks. This causes the right half of the body to be in a state of flexed tension as if the wearer P1 is going up a hill, and the left half of the body to be in a state of stretched relaxation as if the wearer P1 is going down a hill. This is called reciprocal alternating motion by walking. This is due to activation of the left cerebral cortex contralateral to the right side (i.e., pontomedullary reticular formation, PMRF).

As described above, according to the prism glasses 1 of the present embodiment, the two prism lenses 11 refract incident light incident on each of them in the same direction. This changes the visual information input into the brain of the wearer P1 through vision, and in turn changes the spatial perception of the wearer P1 to allow the effect of the visual information on the brain and body of the wearer P1 to be adjusted. This point will be described in detail below.

In general, a person determines her/his own standing position by visual information, vestibular sensation, and somatic sensation. Accordingly, various types of information input from vision effect the cerebral cortex and generate changes in the postural functions of the body. Further, the visual information is changed to change the spatial perception, changing the biased posture sense towards the normal posture sense that should be originally. That is, the input information that the person recognizes as the visual information may be expected to change the posture of the body as output information at an unconscious level by displacing the external space that is input through the vision.

For example, in a case in which a patient with strabismus complains of back pain when walking, as a result of analyzing the walking movements of the patient divided into the walking cycles of the patient, it has been confirmed that compensatory movements are reduced when the prism lenses 11 are worn. In this case, compensatory movements refer to postural changes and other movements performed to compensate for the fact that the patient has strabismus. To date, exercise instructors and therapists have focused on improving muscle strength in response to functional abnormalities seen in the gait movement, with the primary focus on correcting abnormalities in the gait movement as output by muscles.

However, the visual information, vestibular sensation information, and somatic sensation information are involved in the gait control. In addition, it has been confirmed recently that the visual information is used to the maximum extent for the function to cope with the disturbance of the movement pattern from the body control system that is repeatedly performed prior to occurring of the disturbance as well as the body control system that allows the patient to perform an ideal movement. Accordingly, for strabismic eye patients, the approach of using prism lenses 11 to alter spatial cognitive function is expected to be significantly effective.

In addition, ensuring the gliding of the eye movements limits the tension in the suboccipital muscle group. Accordingly, it is important to allow the eye movement to be performed independent from the head movement. As in the prism glasses 1 according to the present invention, by using the prism lenses 11 and minimizing the load on the eyeballs, it is expected to ensure proper eyeball alignment. Here, eyeball alignment refers to a position of the eyeball in the eye socket.

Tension in walking may also be regarded as a compensatory act by the body to obtain visual information other than grounding and ground perception. That is, separating the movement of the eyeballs from the movement of the head (eye sockets) reduces the sacrifice of the other sensory organs and muscle tension in the extensor muscle groups to acquire vision.

In the case of using the base-left prisms 11A as in the prism glasses 1 according to this embodiment, the act of reaching for the target is repeatedly learned by using the space moved to the right side together with the target. This allows the wearer P1 to improve various movements in daily life by using the prism lenses 11 to change the space that the wearer P1 is unable to recognize due to injury or disease.

Specifically, patients with hemispatial neglect due to brain damage lose the ability to perceive half of their field of view, which significantly impairs their quality of life. Half of the field of vision cannot be recognized, significantly effecting walking and movement. The use of prism lenses 11 for the hemispatial neglect due to brain damage may help to improve the quality of life QOL of the client.

In addition, the unconscious position of the tongue in the mouth is connected to the eyeball alignment. This is due to the simultaneous firing action by the brainstem. Accordingly, the prism lenses 11 allow the position of the tongue to be changed. In the case of the base-left prisms 11A, the tongue of the wearer will be closer to the right side.

### (Second unclaimed Embodiment)

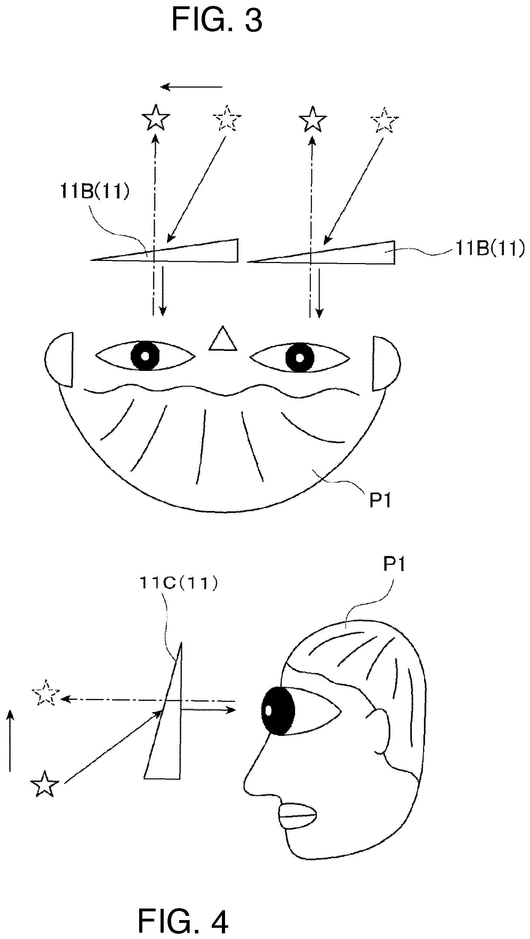

Next, the prism glasses 1 according to the second unclaimed embodiment of the present invention will be described with reference to FIG. 3. In the following description, the description of the same configuration and the same advantages as in the first unclaimed embodiment are omitted. FIG. 3 shows the refraction of incident light in the prism glasses 1 according to the second unclaimed embodiment.

As shown in FIG. 3, the two prism lenses 11 in the prism glasses 1 according to the present embodiment are thicker from the left side to the right side as viewed by the wearer P1 when the wearer P1 uses them. The prism lenses 11 are called base-right prisms 11B.

In the case of the base-right prisms 11B, the visual information of the wearer P1 is input in a state in which the visual information is shifted to the left side more than the actual space. This promotes the rotational movement of the eyeballs in the left direction. In addition, in the body of the wearer P1, the left weighting is promoted when she/he walks. This causes the left half of the body to be in a state of flexed tension as if the wearer P1 is going up a hill, and the right half of the body to be in a state of stretched relaxation as if the wearer P1 is going down a hill. This is due to the activation of the right cerebral cortex contralateral to the left side.

As described above, in the case of using the base-right prisms 11B as in the prism glasses 1 according to this embodiment, the act of reaching for the target is repeatedly learned by using the space moved to the left side together with the target. This allows the wearer P1 to improve various movements in daily life by using the prism lenses 11 to change the space that the wearer P1 is unable to recognize.

A person inherently has a predominance of right peripheral vision over left peripheral vision. This is related to the right center of gravity and the fact that the left cerebral cortex is more active than the right cerebral cortex. In the case of the base right prisms 11B, the tongue of the wearer P1 will be closer to the left side.

### (Third unclaimed Embodiment)

Next, the prism glasses 1 according to the third unclaimed embodiment of the present invention will be described with reference to FIG. 4. In the following description, the description of the same configuration and the same advantages as in the first unclaimed embodiment are omitted. FIG. 4 shows the refraction of incident light in the prism glasses 1 according to the third unclaimed embodiment.

As shown in FIG. 4, the two prism lenses 11 in the prism glasses 1 according to the present embodiment are thicker from the upper portion to the lower portion. The prism lenses 11 are called base-down prisms 11C. In the case of the base-down prisms 11C, the visual information of the wearer P1 is input in a state in which the visual information is shifted more upward than the actual space. This promotes the upward rotation movement of the eyeballs. In addition, the position of the head of the body of the wearer P1 changes to the back. In addition, heel contacting the ground and flexion of the flexor muscle group are promoted during walking.

As described above, the prism glasses 1 according to the present embodiment are capable of limiting the forward head position of the head and neck at which the neck tilts such that the head moves forward to reduce the load on the neck.

For example, if the neck is tilted such that the head is positioned 10 cm forward from the neutral position, the load on the neck increases by about 10 kg. This fails to ensure cervical neutrality (proper posture), resulting in neck pain, stiff shoulders, and obstructed carotid flow, which reduces blood flow to the brain. This fails to maintain the function of continuous blood circulation so that the person tends to feel drowsy and tired. The forward head also has a significant effect on respiratory function, and thus limiting the effect is significantly important for maintaining eye function and neck function. The base-down prisms 11C may be used to maintain these functions.

It is also expected to be effective in using spatial cognitive therapy with base-down prisms 11C to prevent modern diseases. When the eyeballs are rotated downward, such as in downward gyration or forward head or face-down, it causes an increase in intraocular pressure leading to prolongation of the ocular axis. The base-down prisms 11C support the upward movement function of the eyeballs and fail to create an extension of the ocular axis, thereby creating an environment in which a person is less prone to myopia.

Nowadays, due to the effects of digital devices, a person tends to look at things at close quarters, and the eyeballs tend to move downward. It has been reported that downward rotation of the eyeballs may inhibit occlusal movements, especially the proper development of the maxilla, and thus the use of the base-down prisms 11C is expected to promote upward rotation of the eyeballs and the proper development of the maxilla.

In addition, in general, most of the postures in which people look at digital devices correspond to eyeball downward rotations. Eyeball downward rotation refers to the intraorbital downward rotation of the eyeballs. A small amount of space is created posterior to each eye socket when the eye rotates downward. If the intraocular pressure increases (stimulation by digital devices) in a state in which this space is created, the ocular axis may prolong and change the eyeballs to become myopic.

In general, when the human body looks at objects closer than 6 m, the adjustment effect of the lens eye works, and the anterior-posterior axis of the lens becomes longer. The anterior-posterior axis of the lens refers to the thickness of the thickest central portion of the lens eye in the anterior-posterior direction. This impedes the flow of aqueous humor and increases the intraocular pressure. Further, downward rotation of the eyeballs is also a cause of forward head, and if this posture continues, blood flow to the eyeballs is obstructed due to the load on the internal carotid artery, and the worst combination of reduced blood flow plus increased intraocular pressure leads to glaucoma, which may lead to blindness if it progresses, resulting in significant problems. For these problems, the base-down prisms 11C are expected to be effective in limiting the forward head position of the head and neck by causing the eyeballs to move upward.

In addition, a concern is that the intraocular pressure may increase when a person works at a desk using a smartphone and/or computer. The prescription of the base-down prisms 11C raises the horizontal baseline of space. This may be expected to limit the increase in intraocular pressure caused by the downward rotation of the eyeballs and the downward direction of the eyeballs themselves, thereby protecting the function of the eyes from eye diseases such as glaucoma.

In the case of the base-down prisms 11C, the tongue of the wearer P1 will be closer to the upper side. The movement of the tongue is concerned with the movement of the eyes, and in this case, the upward rotation of the eyes allows the tongue to easily touch the palate in the oral cavity unconsciously. This leads to a proper position of the tongue in the mouth and an approach to change breathing from mouth breathing to nose breathing. This is expected to stabilize trunk and lower limb muscle strength, improve forward head, and eliminate apnea syndrome in the low tongue position.

The base-down prisms 11C may also be used to adjust the autonomic nervous system in unconsciousness. Modern people often use their eyes in such a way that results in a predominantly eyeball downward rotation. The action of the eyeball downward rotation is innervated by the trochlear and oculomotor nerves. Since the pulley nerve as the more dominant fourth cranial nerve is innervated by the sympathetic nervous system, the sympathetic nervous system is always overactive during the eyeball downward rotation.

In contrast, the base-down prisms 11C support the upward rotation of the eyeballs. The eyeball upward rotation movement is innervated by the oculomotor nerve as the third cranial nerve, and the oculomotor nerve is parasympathetically innervated. This may expect an effect of increasing the activity of the parasympathetic nervous system by performing the eyeball upward rotation movement.

In addition, the base-down prisms 11C may be used to unconsciously support the optimization of the tongue position. That is, the eyeball upward rotation displaces the tongue upward to contact the palate. When the tongue is in this position, the parasympathetic nervous system is dominant since a person subconsciously promotes nasal breathing.

In addition, the frontal lobe of the brain consumes more oxygen when a person breaths through the mouth than when she/he breaths through the nose, and the activity of it fails to rest. In contrast, nasal breathing reduces the breathing frequency, and the effect of parasympathetic nerve dominance may be further expected.

In addition, a posture in which flexion of the flexor muscle group is predominant using the base-down prisms 11C may be expected to limit tension in the posterior mediastinum. Since the posterior mediastinum is a collection of sympathetic ganglia, limiting the tension in the posterior mediastinum may be expected to promote inhalation during respiration. The above described three effects of the upward rotation of the eyeballs, change in tongue position, and limiting of tension in the posterior mediastinum may be expected to have a significantly large effect on adjusting the balance of the autonomic nervous system by creating a state of parasympathetic dominance in place of the constant state of sympathetic dominance that is characteristic of modern people.

### (Forth unclaimed Embodiment)

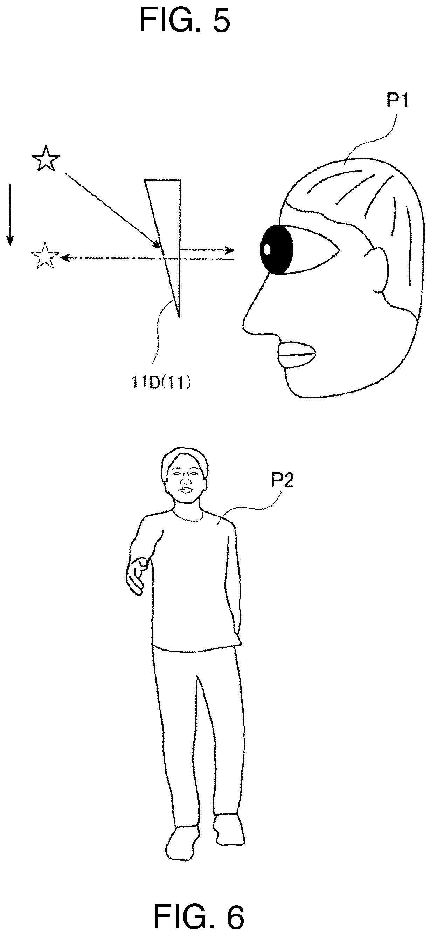

Next, the prism glasses 1 according to the fourth unclaimed embodiment of the present invention will be described with reference to FIG. 5. In the following description, the description of the same configuration and the same advantages as in the first unclaimed embodiment are omitted. FIG. 5 shows the refraction of incident light in the prism glasses 1 according to the fourth unclaimed embodiment.

As shown in FIG. 5, the two prism lenses 11 in the prism glasses 1 according to the present embodiment are thicker from the lower portion to the upper portion. The prism lenses 11 are called base-up prisms 11D. In the case of the base-up prisms 11D, the visual information of the wearer P1 is input in a state in which the visual information is shifted more downward than the actual space. This promotes the downward rotation movement of the eyeballs. In addition, the position of the head of the body of the wearer P1 changes to the front. In addition, limitation of heel contacting the ground and stretching of the extensor muscle group are promoted during walking.

In the case of the base-up prisms 11D according to this embodiment, the tongue of the wearer P1 will be closer to the lower side. The movement of the tongue is concerned with the movement of the eyes, which may lead to over-tensioning of the lower limb muscle groups, which could, for example, disrupt a stable state on purpose. A situation in which such an effect is expected is assumed, for example, an application in which a person that fails to be good at stretching an extensor muscle group selectively uses it in a sports situation, for example.

### (Method for Selecting Prism Lenses 11)

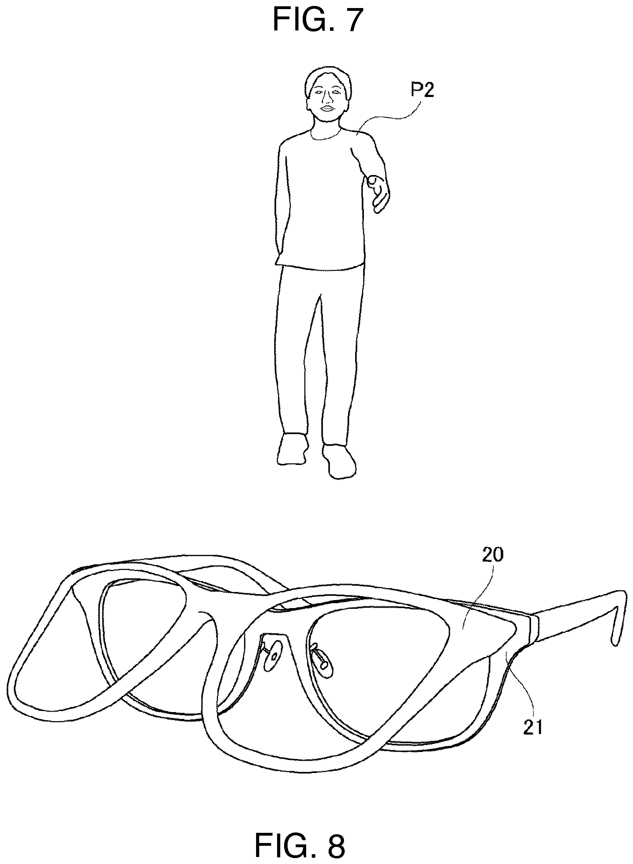

Next, with reference to FIGS. 6 and 7, a method for selecting prism lenses 11 to determine which of the prism lenses 11 of the first to fourth unclaimed embodiments should be used will be described. FIG. 6 is a diagram illustrating the first posture in the method for selecting the prism lenses. FIG. 7 is a diagram illustrating the second posture in the method for selecting the prism lenses.

In the method for selecting the lenses in the prism glasses 1, a step of identifying a direction of eyeball immobility of the subject P2, and a step of selecting prism lenses 11 based on the direction of eyeball immobility are performed.

In the immobile direction identifying step, as shown in FIGS. 6 and 7, it is checked whether the subject P2 is capable of moving only the eyeballs up and down and left and right with respect to the head (eye sockets) while maintaining the mid-stance posture during walking (referred to as separation movement). This identifies the direction of eyeball immobility, which is the direction in which it is difficult for the subject to move the eyeballs. Next, in the step of selecting the lenses, prism lenses 11 that facilitate the movement of the eyeballs in the direction of eyeball immobility identified in the immobility direction identifying step are selected. These will be described in detail below.

First, as the immobility direction identifying step, the subject P2 is caused to maintain a posture that is the middle right stance (first posture) as shown in FIG. 6. The middle right stance is directed to a state in which the right side of the body is flexed (tensed) and the left side is stretched (relaxed). To describe this posture in detail, the subject is caused to stand such that the right lower limb is positioned behind the left lower limb. In this case, the right knee is not fixed. The left upper limb is positioned posteriorly and the right one anteriorly (to reproduce the alternating gait motion). The right hip joint is also positioned more posteriorly than the left hip joint. If the subject is unable to take this posture, it is out of evaluation and the prism lenses 11 are not ready for use. Also, the subject is caused to maintain the posture without stopping breathing during the evaluation.

Next, in the state shown in FIG. 6, A) only the eyeballs are moved downward to check if the posture may be maintained while the subject is looking downward. In addition, B) it is checked if the subject is able to maintain the posture while looking to the right with only the eyeballs. If the determinations in A) and B) are NG, it is recognized that the direction of eyeball immobility is the right side. In this case, a plan in which the base-left prisms 11A enhance right visuospatial perception is created.

Next, in the state shown in FIG. 6, D) only the eyeballs are moved toward the left side to check if the posture may be maintained while the subject is looking at the left side. If the determination in D) is NG, it is recognized that the immobility direction is the left side. In this case, in the step of selecting the lenses, the base-right prisms 11B are selected as prism lenses 11 that facilitate eyeball movement toward the left side.

Next, in the state shown in FIG. 6, B) only the eyeballs are moved upward to check if the posture may be maintained while the subject is looking upward. If the determination in B) is NG, it is recognized that the direction of eyeball immobility is upward. In this case, in the step of selecting the lenses, the base-down prisms 11C are selected as prism lenses 11 that facilitate upward eyeball movement.

Next, from the state shown in FIG. 6, E) the head is turned to the left, and the right side is looked at with the eyeballs only. If the eyeball movement fails to be independent from the head and neck movement in this movement, the evaluations in A) to D) that have already been performed may fail to be appropriate. Accordingly, the evaluations in A) to D) are performed again.

In addition, the subject P2 is caused to maintain a posture (second posture) that is the middle-left stance as shown in FIG. 7. The middle-left stance is directed to a state in which the left side of the body is flexed (tensed) and the right side is stretched (relaxed). Then, F) only the eyeballs are moved downward to check if the posture may be maintained while the subject is looking downward. In addition, G) it is checked if the subject is able to maintain the posture while looking to the right with only the eyeballs. Further, H) it is checked if the subject is able to maintain the posture while looking to the left with only the eyeballs. If the determinations in F), G), and H) are NG, it is recognized that the direction of eyeball immobility is the left side. In this case, a plan in which the base-right prisms 11B enhance left visuospatial perception is created.

In addition, in the state shown in FIG. 7, I) only the eyeballs are moved upward to check if the posture may be maintained while the subject is looking upward. If the determination in I) is NG, it is recognized that the direction of eyeball immobility is upward. In this case, a plan in which the base-down prisms 11C enhance upper visuospatial perception is created.

In the state shown in FIG. 7, the head is turned to the right, and the left side is viewed with the eyeballs only. If the eyeballs cannot be moved independent from the head and neck in this movement, the evaluations in F) to I) that have already been performed may fail to be appropriate. Accordingly, the evaluations in F) to I) are performed again.

### (Variations)

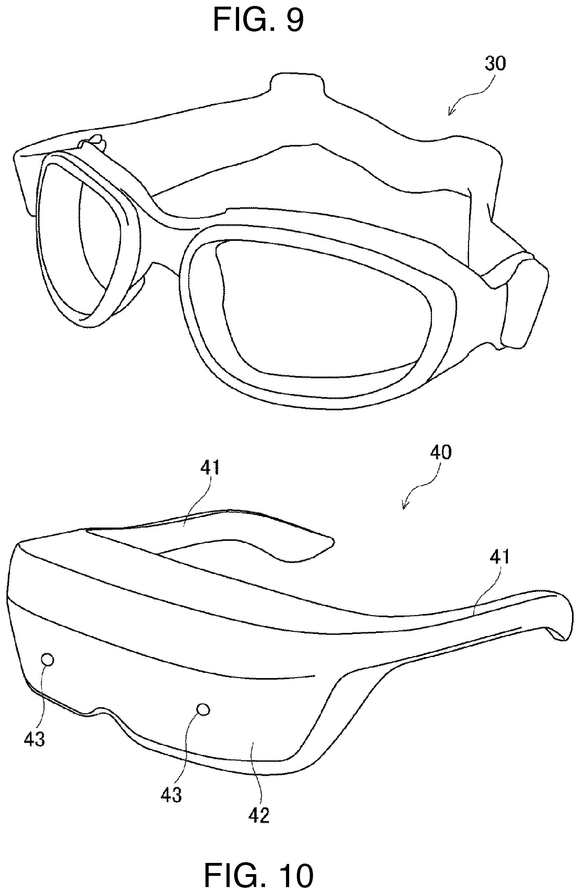

Next, variations of the prism structure will be described using FIGS. 8 and 9. FIG. 8 shows a first variation of the prism structure according to the present invention, and FIG. 9 shows a second variation of the prism structure according to the present invention. The prism structure 20 according to the first variation shown in FIG. 8 is directed to prism lenses with an attachment structure that may be attached to and detached from the existing glasses 21, or, in place of such an attachment structure, a prism sheet in the form of a seal, for example, may be configured to be attached to the existing glasses 21.

The prism structure 30 according to the second variation shown in FIG. 9 is directed to a goggle structure in which the prism lenses may be fixed to the head of the wearer P1 by wrapping the structure around the head. The prism lenses may be two left and right lenses, or a single lens for the left and right sides.

### (Fifth unclaimed Embodiment)

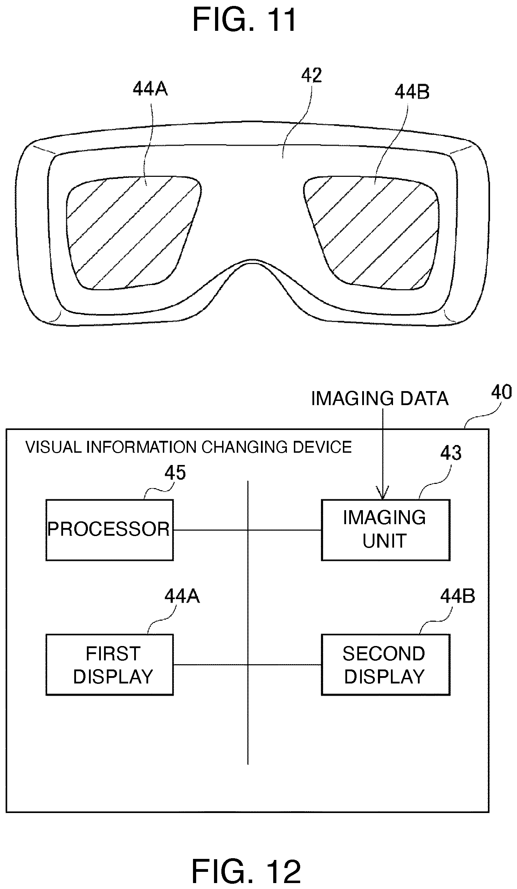

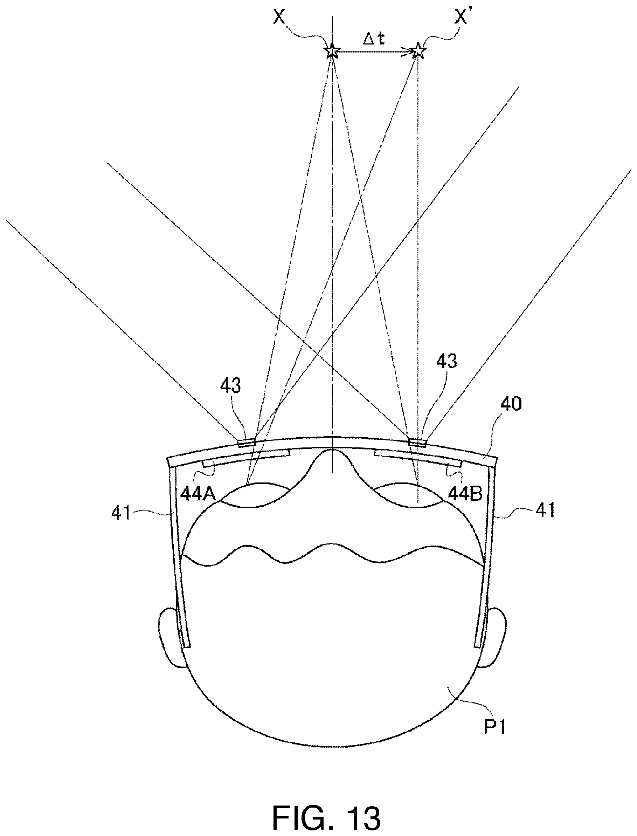

Next, the visual information changing device 40 according to the fifth unclaimed embodiment will be described with reference to FIGS. 10 to 13. In this embodiment, in place of the prism structure, the visual information changing device 40 is embodied by a virtual reality VR goggle. FIG. 10 is a diagram illustrating an appearance of the visual information changing device 40 according to the fifth unclaimed embodiment of the present invention, and FIG. 11 is a diagram illustrating a display 44 of the visual information changing device 40. FIG. 12 is a block diagram illustrating a configuration of the visual information changing device 40, and FIG. 13 is a diagram illustrating the state of use of the visual information changing device 40.

As shown in FIG. 10, the visual information changing device 40 includes two left and right frames 41 and a main body of the device supported by the frames 41. The two left and right of frames 41 are placed over the ears to allow the device to be worn such that the main body 42 covers the eyes of the wearer P1. Imaging unit(s) 43 facing forward is disposed in front of the device body 42. The imaging units 43 have a function of capturing images using light from the external world, and are arranged in a pair spaced on the left and right sides. The imaging unit(s) 43 may be one, or three or more.

As shown in FIG. 11, a display 44 (monitor) is provided on the rear surface of the main body 42 of the device (in front of the wearer P1). The display 44 is configured by a first display 44A on the left side and a second display 44B on the right side. Images corresponding to binocular parallax are displayed on the first display 44A and the second display 44B, respectively. The display 44 may be configured by a single monitor common to the left and right sides.

As shown in FIG. 12, the visual information changing device 40 includes a processor 45. The processor 45 performs coordinate transformation processing on the imaging data imaged by an imaging unit 43 to generate the coordinate transformation data. The processor 45 controls portions of the visual information changing device 40, and may be, for example, a central processing unit CPU. The processor 45 may be a microprocessor, an ASIC, and an FPGA, for example, and may have any configuration, not limited to these examples, as long as it is capable of controlling the portions of the visual information changing device 40. Further, the processor 45 may be implemented by cloud computing configured by one or more computers, and may be implemented in a device different from the device body 42.

The display 44 then displays the coordinate transformation data generated by the processor 45. This point will be described in detail below. As shown in FIG. 13, the two left and right imaging units 43 each take images using light from the external world in front of them to acquire two types of imaging data. The two types of imaging data have different data contents based on the parallax caused by the positions of the two image sensors.

Next, the processor 45 assumes a reference point X as a focal point of vision of the wearer P1 based on these data. For this reference point X, coordinate transformation processing is performed for each of the two types of imaging data so that the reference point X becomes the displacement point X' based on the preset displacement difference Δt. This process causes the spatial information held by each of the two coordinate transformation data to be shifted to the right by the displacement difference Δt relative to the imaging data. Although the example of managing the displacement difference Δt as a dimension is described, it may also be managed by the amount of change in angle.

Each of the first display 44A and the second display 44B then displays the corresponding one of the two types of coordinate transformation data to the corresponding eye so that the spatial information is input to the wearer P1 in a changed state. This allows the direction of the light from the external world to be changed and input to the eyes of the wearer P1, thereby achieving the same effect as that of the base-left prisms 11A according to the first unclaimed embodiment described above.

The direction in which the spatial information is changed may be either up, down, left or right, and any direction and magnitude of the displacement difference Δt may be set optionally. In such a case, for example, a setting portion that provides input to the processor 45 may be provided in the main body 42 of the device, and the displacement difference Δt may be adjusted to correspond to the above described refractive angle of the prisms by operating this setting portion.

The above described unclaimed embodiments are merely examples of representative embodiments of the present invention. Accordingly, various variations may be made to the above described unclaimed embodiments to the extent that they are within the scope of the spirit of the present invention.

For example, in each of the above unclaimed embodiments, a configuration in which the refractive angle of each prism lens 11 is 0.5° to 20° is shown. Any refractive angle of the prism lens 11 may be set optionally. The prism lens 11 may have or may fail to have a predetermined power for vision correction to eliminate nearsightedness, farsightedness, or astigmatism.

In addition to the variations described above, these variations may be selected and combined as appropriate, or the other variations may be applied.

### (Sixth unclaimed Embodiment)

In the above-mentioned unclaimed embodiment, an example is illustrated in which prismatic lenses that are thicker at one end than at the other end are used so that the prism lens glasses allow the areas that the wearer is unable to see (or recognize) when not wearing the prism lens glasses to be visible, thereby stimulating the brain and activating areas of the brain that are not being used. The phrase "areas that the wearer is unable to see (recognize)" here includes the spatial information that is not widely used in the visuospatial map, which is biased by a decline in visuospatial cognitive ability caused by actual brain damage, for example, or by habits causing shifts in visual space depending on the environment even in healthy people.

In this sixth unclaimed embodiment, a form of improving the convenience of prism lens glasses will be described. That is, the following describes a form in which a single set of prism lens glasses is capable of changing the input direction to the field of view of the wearer.

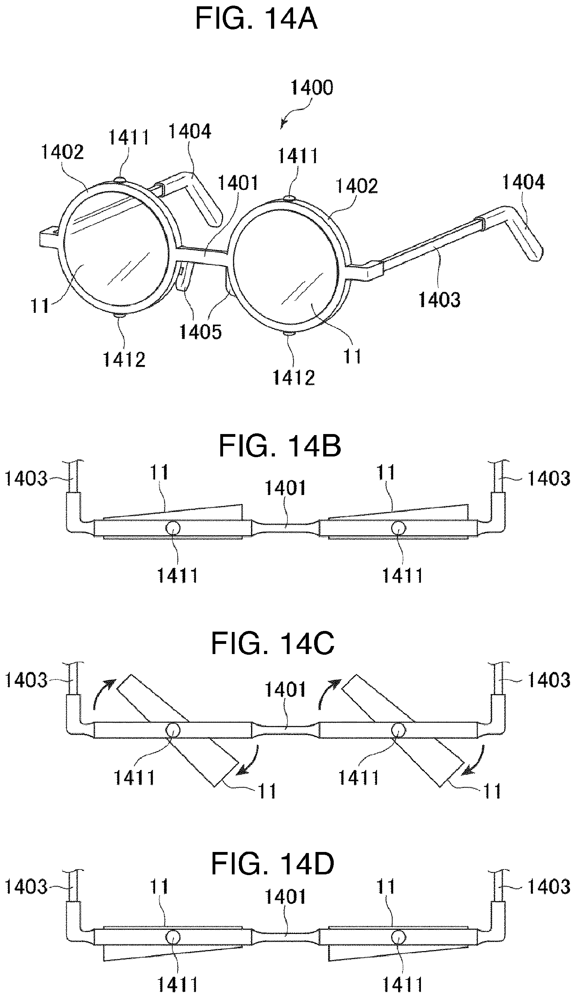

FIGS. 14A to 14C show a form of prism lens glasses according to this sixth unclaimed embodiment. FIG. 14A is a perspective view of prism lens glasses 1400, and FIGS. 14B through 14D are top views of the prism lens glasses 1400. As shown in FIG. 14A, the prism lens glasses 1400 have a frame and prism lenses 11 as shown in the above unclaimed embodiment. The frame includes a bridge 1401, front portions 1402 that are connected by the bridge 1401 and sandwich the corresponding prism lenses 11, temples 1403 extending from the corresponding front portions 1402, tips 1404 provided at the corresponding ends of the temples, and nose pads 1405 that are provided on the corresponding front portions 1402 and contact the nose of the wearer to support the prism lens glasses.

In the sixth unclaimed embodiment, as shown in FIGS. 14B to 14D, the left and right prism lenses 11 are respectively rotatably connected to the corresponding front portions. FIG. 14B shows the state before rotation, FIG. 14C shows the state during rotation, and FIG. 14D shows the state after rotation. FIG. 14D may be before rotation and FIG. 14B may be after rotation, and the direction of rotation in FIG. 14C may be reversed. The nose pads 1405 are configured to fail to interfere with the rotation of the prism lenses 11.

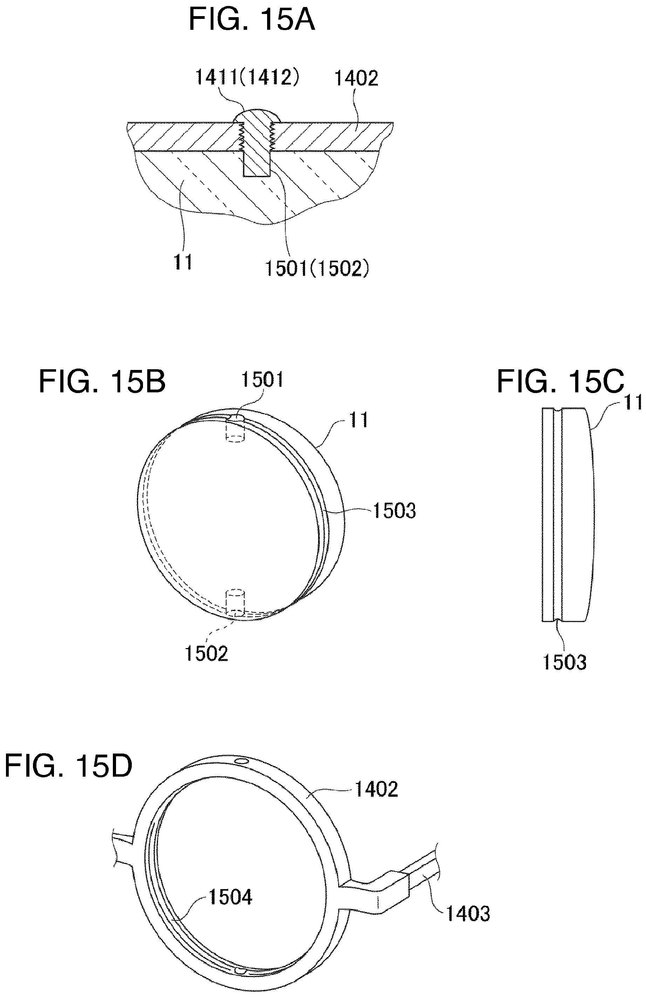

Specifically, as shown in FIG. 15A, each prism lens 11 is rotatably connected to the corresponding front portion 1402 by screws 1411 and 1412 at the top and bottom, respectively. FIG. 15A is an enlarged cross-sectional view of the portion of the front portion 1402 where the screws 1411 and 1412 are provided.

As illustrated in FIG. 15A, the front portion 1402 includes female threads that are configured to mate with the corresponding threads of the screws 1411 and 1412. The prism lens 11 includes holes 1501 and 1502 into which the corresponding tips of the screws 1411 and 1412 are inserted. Both the screws 1411 and 1412 are semi-threaded with no threads at their tips where they mate with the corresponding holes 1501 and 1502. Accordingly, the prism lens 11 is rotatably connected to the front portion 1402. Even in a configuration in which a hemispherical concave portion is provided on the front portion 1402 and a hemispherical convex portion that fits into the concave portion is provided on an edge of the prism lens 11, the prism lens 11 may be rotatably connected to the front portion 1402.

As shown in FIGS. 15B and 15C, the prism lens 11 includes a groove 1503 along an edge of the lens. FIG. 15B is a perspective view of the prism lens 11, and FIG. 15C is a side view of the prism lens 11. As shown in FIG. 15D, the front portion 1402 of the prism lens glasses 1400 includes a protrusion 1504 on its inner side for fitting into the groove 1503 of the prism lens 11. FIG. 15D shows the front portion 1402 in a state in which the front portion 1402 is not fitted with the prism lens 11. The frame of the prism lens glasses 1400 is configured to have a certain level of rigidity and to have enough elasticity to allow rotation of the prism lens 11 and to fit the protrusion 1504 into the groove 1503 by human force so that the prism lens 11 fails to rotate unless a force exceeding a predetermined level is applied. This prevents the prism lens 11 from rotating by itself when the wearer wears the prism lens glasses 1400. A configuration in which the groove 1503 is provided in the front portion 1402 and the protrusion 1504 is provided on the prism lens 11 may also be employed.

The prism lens glasses 1400 function as base-left prisms in the form shown in FIG. 14B and as base-right prisms in the form shown in FIG. 14D. The prism lens glasses 1400 may shift the image in two directions, left and right, and input it to the eyes of the wearer as described above. Leading a life while wearing the prism glasses 1400 for a certain amount of time or longer (for example, but not limited to half a day) and shifting the image and inputting it to the eyes allow the wearer to stimulate areas of the brain that are different from normal. As shown in the above unclaimed embodiment, this also allows the wearer to use the glasses to correct the posture of the wearer, for example.

As described above, the prism lens glasses 1400 according to the sixth unclaimed embodiment allows the wearer to accept a view input in which the image is shifted from the right to left or from the left to right, allowing the user to use the glasses such that the brain of the wearer is stimulated in two directions.

### (Sixth unclaimed Embodiment, Variation 1)

In the examples shown in FIGS. 14A to 14D and 15A to 15D above, an example of rotating the prism lens 11 about the vertical direction as the rotation axis is shown. However, the example is not limited to the vertical direction as the rotation axis. It may be rotated about the horizontal direction as the rotation axis.

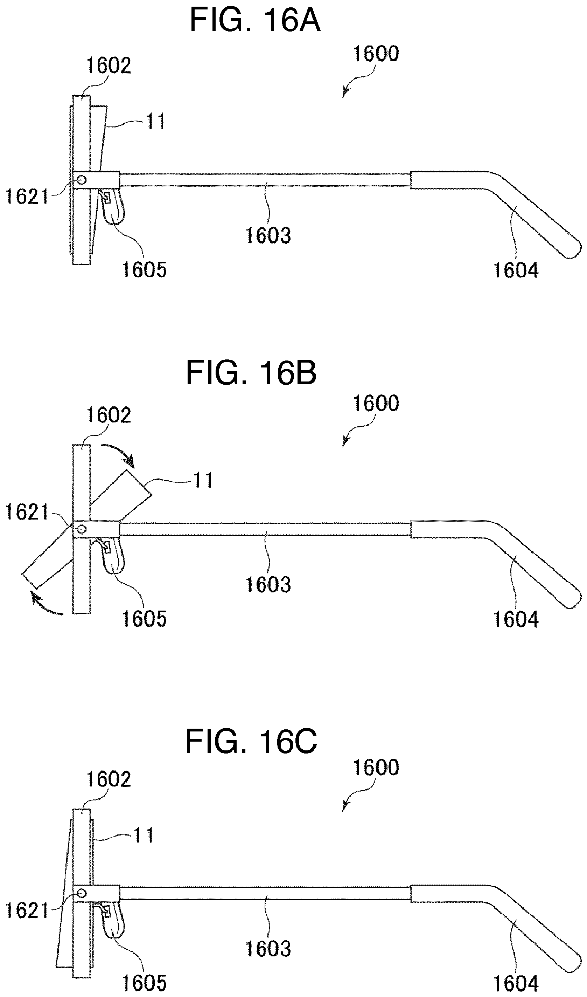

FIGS. 16A through 16C show side views of prism lens glasses 1600. In contrast to the prism lens glasses 1400 shown in FIG. 14A where the screws 1411 and 1412 are provided vertically to the front portion 1402, this variation differs in that a screw 1611 is horizontally connected to the front portion 1602 and prism lens 11.

As shown in FIG. 16A, in the prism lens glasses 1600, the prism lens 11 is sandwiched by the front portion 1602. The prism lens 11 is rotatably connected to the front portion 1602 by the screw 1621 at an end of the front portion 1602 on the temple 1603 side.

As shown in FIGS. 16A to 16C, the left and right prism lenses 11 are respectively rotatably connected to the corresponding front portions 1602. FIG. 16A shows the state before rotation, FIG. 16B shows the state during rotation, and FIG. 16C shows the state after rotation. FIG. 16C may be before rotation and FIG. 16A may be after rotation, and the direction of rotation in FIG. 16B may be reversed. The nose pads 1605 are configured to vertically rotate without interfering with the rotation of the prism lenses 11. Accordingly, the prism lens glasses 1600 according to the variation 1 may be used in both a base-up form as shown in FIG. 16A and a base-down form as shown in FIG. 16C.

The rotation axis of the prism lens 11 may be inclined with respect to the front portion as long as it is rotatable.

### (Sixth unclaimed Embodiment, Variation 2)

In the above sixth unclaimed embodiment and sixth unclaimed embodiment variation 1, a circular shape is shown as an example as a shape of a prism lens of prism lens glasses. However, the shape of the prism lens 11 is not limited to the circular shape as long as the prism lens 11 is rotatable with respect to the front portion of the prism lens glasses.

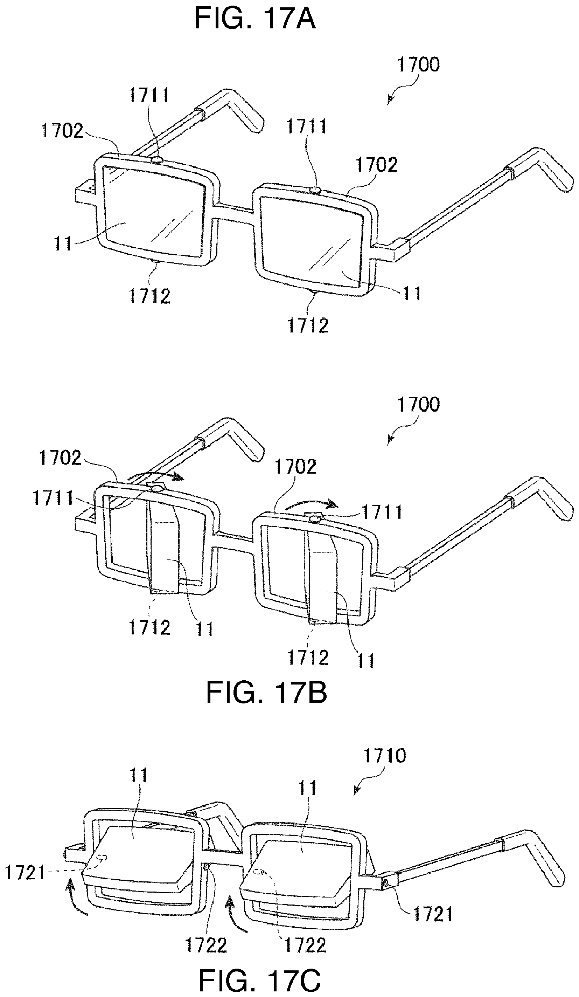

FIGS. 17A to 17C show prism lens glasses 1700 in which the prism lenses 11 are configured as substantially rectangle with curved sides in place of the circular shape.

FIG. 17A is a perspective view of the prism lens glasses 1700. As shown in FIG. 17A, the prism lens glasses 1700 are configured such that the shape of the front portion 1702 and the prism lens 11 is substantially rectangular. Each prism lens 11 is rotatably connected at the top and bottom of the corresponding front portion 1702 of the frame by screws 1711 and 1712, respectively. Accordingly, the prism lens 11 of the prism lens glasses 1700 is configured to be laterally rotatable with respect to the front portion 1702 of the frame as shown in FIG. 17B. Accordingly, in the same manner as shown in FIGS. 14B and 14D, prism lens glasses 1700 that function as base-left prism lens glasses and base-right prism lens glasses may be provided.

In contrast, FIG. 17C shows an example in which each prism lens 11 is connected to the front portion 1702 of the frame in the left-right direction in a rotatable manner. As shown in FIG. 17C, the prism lens 11 is connected horizontally to the front portion 1702 by a screw 1721 from the outside of the front portion (right outer end and left outer end). In the same manner, the prism lens 11 is connected horizontally to the front portion 1702 by a screw 1722 from the inside of the front portion (bridge side). The axes of the screw 1721 and screw 1722 are the same with each other. Accordingly, the prism lens 11 rotates with respect to the front portion 1702 about the same rotation axis. The shapes of the screws 1721 and 1722 and the manner in which they are connected to the front portion 1702 are in the same manner as shown in FIG. 15A.

Although FIG. 17B shows an example in which the prism lens 11 is laterally rotated and FIG. 17C shows an example in which the prism lens 11 is vertically rotated, the direction of rotation may be opposite to the direction of the arrows shown in FIGS. 17B and 17C.

As described above, the prism lens 11 is rotatable with respect to the frame and may be of any shape as long as the prism lens 11 mates with the frame, left and right, up and down. That is, the appearance of the prism lens 11 may be of any shape as long as the left and right shapes are symmetrical about the rotation axis when the lens is horizontally rotated and the top and bottom shapes are symmetrical about the rotation axis when the lens is vertically rotated. With respect to the thickness of the prism lens 11, it is sufficient if the thickness of the prism lens 11 becomes thicker (thinner) from one end to the other end. Accordingly, prism lens glasses having prism lenses 11 of a shape other than circular may also be provided, and the satisfaction of the wearer in viewing the glasses as a fashion item may also be achieved.

### (Sixth unclaimed Embodiment, Variation 3)

In the above sixth unclaimed embodiment, variation 1 and variation 2, examples are shown in which the direction of refraction of light may be changed by rotating the prism lens 11 with respect to the front portion of the frame, thereby changing the areas of the brain of the wearer to be stimulated. This variation 3 describes an example in which the base-left prism lens glasses may be modified into base-right prism lens glasses by changing the way the wearer uses the prism lens glasses.

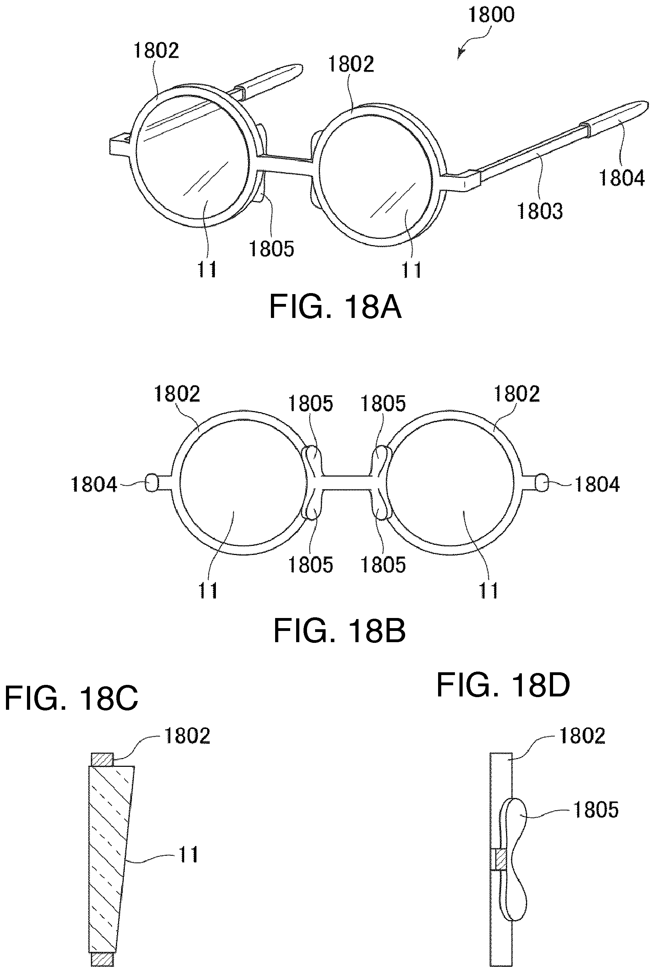

FIG. 18A is a perspective view illustrating the appearance of the prism lens glasses 1800 according to the present variation 3. The prism lens glasses 1800 are directed to glasses that may be used in the form shown in FIGS. 18A to 18D and also in the form in which the top and bottom are reversed. To this end, as shown in FIG. 18A, each tip 1804 at the corresponding end of the temple 1803 that connects to the front portion of the prism lens glasses 1800 is linearly configured. FIG. 18B is a rear view of the side of the prism lens glasses 1800 on which the wearer looks when using the prism lens glasses 1800, and as shown in FIGS. 18B and 18D, the front portions 1802 include nose pads 1805 in the vertical direction thereof. In the prism lens glasses 1800, as shown in the previous embodiments and variations, and as shown in FIG. 18C, a prism lens 11 having a thickness increasing (decreasing) from one end to the other is used. In the prism lens glasses 1800 shown in FIG. 18A, the direction of increasing the thickness of the prism lens 11 may be left-right direction, up-down direction, or even diagonal direction depending on the areas of the brain to be stimulated.

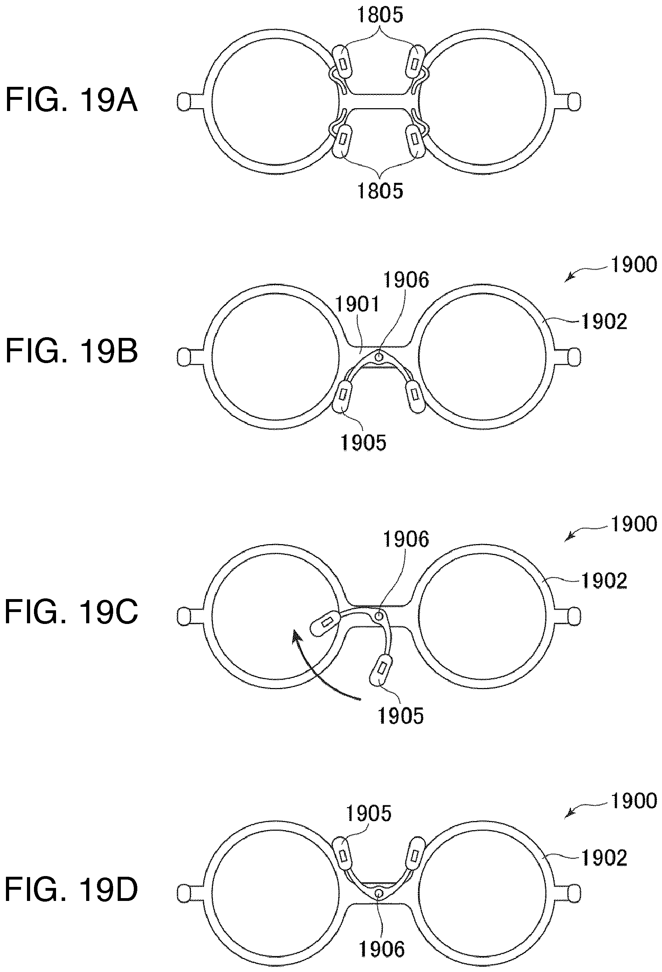

FIGS. 19A to 19D show another example of nose pads. FIG. 19A shows an example of general nose pads in the vertical direction. Even in this form, the prism lens glasses 1800 may be fixed to the face of the wearer in any of the vertical directions.

FIGS. 19B through 19D show an example in which the nose pads 1905 are rotatably provided about the axis 1906 with respect to the bridge 1901 connecting the front portions 1902 of the prism lens glasses 1900. As illustrated, the nose pads 1905 are configured by a series of members for left and right, and include pads in contact with the nose of the wearer at ends thereof. At the central portion thereof, the nose pads are rotatably connected to the bridge 1901 by the shaft 1906.

As shown in the changes of FIGS. 19B to 19D, by rotating the nose pads 1905, the prism lens glasses 1900 may be used with the lower side of the paper as the lower side in the case of FIG. 19B and with the upper side of the paper as the lower side in the case of FIG. 19D. Accordingly, with only the two nose pads, the prism lens glasses 1900 that may withstand use in both directions, up and down, may be provided.

The conception to allow the prism lens glasses 1800 and prism lens glasses 1900 to be usable either up or down is not limited to these. For example, when each tip of the prism lens glasses 1800 shown in FIG. 18A is configured to be bent with respect to the corresponding temple to facilitate hanging on the ears of the wearer, the tip may be configured to be rotatable with respect to the temple so that it can be hung on the corresponding ear of the wearer even when used upside down. Alternatively, when the tip of the prism lens glasses 1800 is configured to be bent with respect to the corresponding temple for easy hanging on the corresponding ear, the tip may be made in a two-way structure with the tip separated from the temples on the upper and lower sides thereof so that it can be hung on the corresponding ear of the wearer from either side.

### (Embodiment according to the claimed invention)

In the above sixth unclaimed embodiment, variation 1 and variation 2, examples of changing the direction of shifting the field of view by rotating the prism lens 11 vertically or horizontally with respect to the front portion of the frame are shown. In this embodiment, an example of rotating the prism lens 11 along the front portion of the frame according to the claimed invention is described.

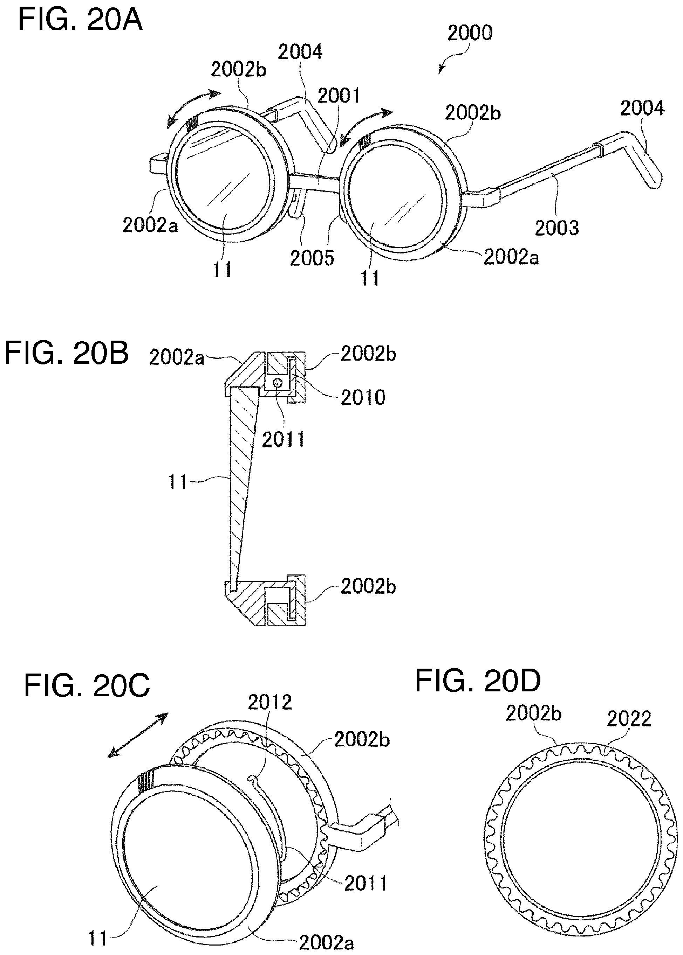

FIG. 20A is a perspective view of prism lens glasses 2000. As shown in FIG. 20A, the prism lens glasses 2000 include a frame and prism lenses 11 as shown in the above embodiment. The frame includes a bridge 2001, front portions 2002 (each including 2002a, 2002b) that are connected by the bridge 2001 and sandwich the corresponding prism lenses 11, temples 2003 extending from the corresponding front portions 2002b, tips 2004 provided at the corresponding ends of the temples, and nose pads 2005 that are provided on the corresponding front portions 2002 and contact the nose of the wearer to support the prism lens glasses.

FIG. 20B is a cross-sectional view of the front portion 2002 of the prism lens 11 in a side view. As shown in the above embodiment, the prism lens 11 is directed to a prism lens capable of changing the visual information input to the corresponding eye of the wearer by refracting the incoming incident light in the same direction in comparison to the case where the glasses are not worn by the wearer. As illustrated in FIG. 20B, the prism lens has a configuration in which the thickness thereof increases (decreases) from one end to the other end. For the sake of clarity, FIG. 20B shows an example of the prism lens 11 where the upper portion in the drawing is the thickest portion and the lower portion is the thinnest portion. Since the prism lens 11 is configured to be rotatable with respect to the front portion as described above, the location (direction) where the thickness becomes the thickest may be changed as appropriate by the rotation angle, and the refractive direction may be changed as well.

FIG. 20C is an exploded perspective view of the front portion 2002 of the prism lens 11. As shown in FIGS. 20A to 20C, the front portion 2002 includes a front side front portion 2002a and a rear side front portion 2002b. The front side front portion 2002a is configured to be rotatable with respect to the rear side front portion 2002b. The front side front portion 2002a includes a folded portion 2010, and the folded portion 2010 is rotatable with respect to the rear side front portion 2002b by fitting the folded portion 2010 into a groove provided in the rear side front portion 2002b.

As shown in FIG. 20C, the front portion 2002 is configured such that the front side front portion 2002a is rotatable with respect to the rear side front portion 2002b by a bezel mechanism and may be fixed at a predetermined angle. That is, the front side front portion 2002a includes a wire 2011 curved along the rim of the front portion 2002, and the wire 2011 includes a protrusion 2102 that is partly configured to have a cheveron shape. As shown in FIGS. 20C and 20D, the rear side front portion 2002b includes curved racks 2022 with inwardly protruding cheverons along its outer rim. The protrusion 2102 mates with the valley portion of the rack 2022 to allow the front side front portion 2002a to be secured against the rear side front portion 2002b such that it fails to rotate. In contrast, the wire 2011 is flexible enough to be deflected when the front side front portion 2002a is rotated by human power. Accordingly, the application of the human power rotates the front side front portion 2002a. In FIG. 20C, the folded portion 2010 is omitted so that it can be easily understood that the wire 2011 mates with each cheveron of the rack 2022 of the rear side front portion 2002b.

In FIGS. 20A to 20D, although the structure to fix the rotation by the wire 2011 is embodied, it may be embodied by the other means than the wire 2011. For example, a rack may also be provided on the front side front portion 2002a, and the projection (cheveron) of the rack on the front side front portion 2002a may be mated with the recessed portion (valley) of the rack 2022 on the rear side front portion 2002b to prevent the front portion 2002 from rotating by itself. The chevelon of one rack may be made shallower (lower) than that of the other rack, allowing the human power to easily rotate the rack, that is, less force is required to rotate it. In addition, the position of the apex of the chevelon of one of the racks may be biased to employ a structure that limits the direction of rotation of the front side front portion 2002a to only one direction, clockwise or counterclockwise. The gap between the chevelons of the rack may be adjusted to set the position where the prism lens 11 stops, i.e., the rotation angle to any angle.

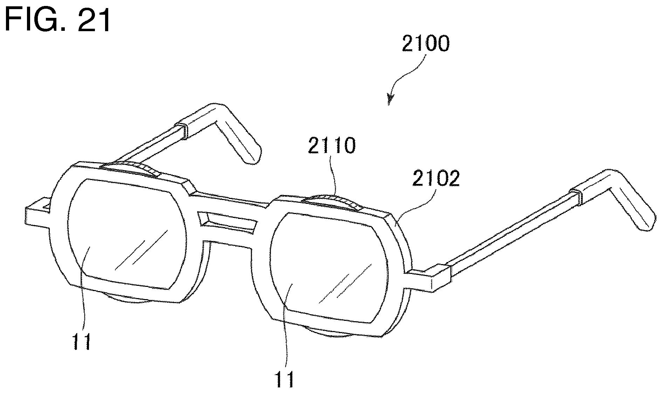

FIG. 21 shows an example in which the prism lens 11 is rotated with respect to the front portion 2102 of the frame along the front portion, and in which the frame is other than circular, although the prism lens 11 itself is circular as in FIGS. 20A to 20D.

As shown in FIG. 21, an example is shown in which the front portion 2102 of the frame is substantially rectangular. Even in such a shape, the prism lens 11 itself is circular and the frame itself may be configured in a shape other than circular, and the prism lens glasses 2100 in a form satisfactory to the wearer may be used.

The prism lens glasses according to the forms of the sixth embodiment may be used as over-lens glasses. That is, a form may be employed in which a wearer that wears glasses for orthoptics may also wear prism lens glasses over the top of the glasses. For this purpose, a spring structure may be employed for the temple portion of the glasses so that the temple portion is biased toward the wearer's side, that is, a spring hinge frame may be used.

When used as the over-lens glasses, the prism lens glasses may fail to have temples, but may be configured to have a mounting portion that is mounted to the glasses of the wearer for orthoptics, for example, as shown in FIG. 8. For example, the prism lens glasses may be configured as clip-on type glasses.

As shown above, the prism lens glasses according to the forms of the sixth embodiment may refract incident light in at least two directions depending on how they are worn so that the field of vision of the wearer may be stimulated in various directions to stimulate various portions of the brain of the wearer. That is, the stimulation of the visual space allows the spatio-temporal and spatial relationships between the self and space or objects in the visual space coordinates to be maintained appropriately in accordance with the environment. The neutrality of visuospatial mapping also serves as the neutrality of physical balance. Therefore, intentional visuospatial stimulation can effect vestibular and somatic senses and apply input stimuli unconsciously to loops through the brain and spinal cord. This allows the brain stimulation to be applied to the areas that are not normally used to activate the brain nerves to allow normally invisible fields of vision to be visible and areas that are visible but unnoticed due to lack of awareness to be visible (or noticeable). In addition, the wearer may wear the prism lens glasses for a certain period of time or longer to change the usual posture of the wearer. More specifically, this allows the wearer to conform to the body coordinates through the visuospatial map (visuospatial coordinates), activate the brain nerves, use senses that are not normally utilized, and generate vision that is easy to recognize through changes in the visual field. This also allows even the information that is actually visible to be areas visible through the change input to the visuospatial mapping. In addition, when the wearer wears the prism lens glasses for a certain period of time or longer, the body movement pattern using the optical illusion effect created by the change of visible space may change the body pattern of the wearer, i.e., it may change the body pattern even when the wearer refrains from wearing the prism lens glasses. This is the stimulus effect of the input to the brain and the output to the body using the sensory organs.

## Claims

1. Glasses (1; 2000) for adjusting an effect on a brain and a body of a wearer, comprising:
a frame (10) for holding prism lenses; and
two left and right prism lenses (11, 11A, 11B, 11C, 11D) arranged side by side in a left-right direction on the frame (10), which lenses refract incident light incident on each of them in the same direction, thereby changing visual information input to eyes of the wearer in comparison to a case where the wearer is not wearing the glasses, wherein
both the two left and right prism lenses are evenly inclined from one end to another end of each of them;
wherein the frame includes a rotating mechanism that holds each prism lens rotatably with respect to the frame, and
the rotating mechanism is configured to rotate each prism lens such that an entire peripheral portion of the prism lens is along a rim of a front portion (2002) of the frame;
the front portion (2002) includes a front side front portion (2002a) and a rear side front portion (2002b),
the prism lens is located and held in the front portion (2002a), and
the front side front portion (2002a) is configured to be rotatable with respect to the rear side front portion (2002b),
**characterized in that**
the front side front portion 2002a includes a folded portion (2010), and the folded portion (2010) is rotatable with respect to the rear side front portion (2002b) by fitting the folded portion (2010) into a groove provided in the rear side front portion (2002b).

2. The glasses according to claim 1, wherein a refractive angle of each prism lens is between 0.5° and 20°.

3. The glasses according to claim 1 or 2, wherein the refractive angles of the two left and right prism lenses are the same with each other.

4. The glasses according to any one of claims 1 to 3, wherein the two left and right prism lenses both increase in thickness from a lower portion to an upper portion of each of them.

5. The glasses according to any one of claims 1 to 4, wherein the two left and right prism lenses both increase in thickness from an upper portion to a lower portion of each of them.

6. The glasses according to any one of claims 1 to 5, wherein the two left and right prism lenses both increase in thickness from a right side to a left side as viewed by the wearer when used by the wearer.

7. The glasses according to any one of claims 1 to 6, wherein the two left and right prism lenses both increase in thickness from a left side to a right side as viewed by the wearer when used by the wearer.

8. The glasses according to claim 1, wherein the rotating mechanism is a rotating bezel (2002a, 2002b, 2011, 2012, 2022).

## Patentansprüche

1. Brille (1; 2000) zum Korrigieren einer Wirkung auf ein Gehirn und einen Körper eines Trägers, die Folgendes umfasst:
ein Brillengestell (10) zum Halten von Prismengläsern und
ein linkes und ein rechtes Prismenglas (11, 11A, 11B, 11C, 11D), die in Richtung von links nach rechts nebeneinander in dem Brillengestell (10) angeordnet sind, wobei die Gläser einfallendes Licht brechen, das in der gleichen Richtung auf jedes von ihnen fällt, und dadurch im Vergleich zu einem Fall, in dem der Träger die Brille nicht trägt, visuelle Informationen für Augen des Trägers ändern, wobei
sowohl das linke als auch das rechte Prismenglas jeweils von seinem einen Ende zu seinem anderen gleichmäßig geneigt ist,
das Brillengestell einen Drehmechanismus aufweist, der jedes Prismenglas in Bezug auf das Brillengestell drehbar hält, und
der Drehmechanismus so ausgelegt ist, dass er jedes Prismenglas so dreht, dass sich ein gesamter Umfangsabschnitt des Prismenglases an einem Rand eines Vorderabschnitts (2002) des Brillengestells befindet,
der Vorderabschnitt (2002) einen vorderen Vorderabschnitt (2002a) und einen hinteren Vorderabschnitt (2002b) aufweist,
sich das Prismenglas in dem Vorderabschnitt (2002a) befindet und darin gehalten wird und
der vordere Vorderabschnitt (2002a) so ausgelegt ist, dass er in Bezug auf den hinteren Vorderabschnitt (2002b) drehbar ist,
**dadurch gekennzeichnet, dass**
der vordere Vorderabschnitt (2002a) einen abgekanteten Abschnitt (2010) aufweist und der abgekantete Abschnitt (2010) durch Einpassen in eine in dem hinteren Vorderabschnitt (2002b) vorgesehene Nut in Bezug auf den hinteren Vorderabschnitt (2002b) drehbar ist.

2. Brille nach Anspruch 1, wobei ein Brechungswinkel jedes Prismenglases zwischen 0,5° und 20° beträgt.

3. Brille nach Anspruch 1 oder 2, wobei sich die Brechungswinkel des linken und des rechten Prismenglases gleichen.

4. Brille nach einem der Ansprüche 1 bis 3, wobei sowohl das linke als auch das rechte Prismenglas jeweils von einem unteren zu einem oberen Abschnitt hin dicker wird.

5. Brille nach einem der Ansprüche 1 bis 4, wobei sowohl das linke als auch das rechte Prismenglas jeweils von einem oberen zu einem unteren Abschnitt hin dicker wird.

6. Brille nach einem der Ansprüche 1 bis 5, wobei sowohl das linke als auch das rechte Prismenglas in Blickrichtung des Trägers bei Benutzung durch den Träger jeweils von einer rechten zu einer linken Seite hin dicker wird.

7. Brille nach einem der Ansprüche 1 bis 6, wobei sowohl das linke als auch das rechte Prismenglas in Blickrichtung des Trägers bei Benutzung durch den Träger jeweils von einer linken zu einer rechten Seite hin dicker wird.

8. Brille nach Anspruch 1, wobei es sich bei dem Drehmechanismus um einen Drehring (2002a, 2002b, 2011, 2012, 2022) handelt.

## Revendications

1. Lunettes (1 ; 2000) permettant d'ajuster un effet sur le cerveau et le corps d'un porteur, comprenant :
une monture (10) pour maintenir des lentilles à prisme ; et
deux lentilles à prisme gauche et droite (11, 11A, 11B, 11C, 11D) agencées côte à côte en direction gauche-droite sur la monture (10), lesdites lentilles réfractant une lumière incidente sur chacune d'elles dans la même direction, modifiant ainsi l'apport d'information visuelle aux yeux du porteur par rapport à un cas où le porteur ne porte pas les lunettes, dans lesquelles
les deux lentilles à prisme gauche et droite sont inclinées uniformément d'une extrémité à l'autre de chacune d'elles ;
dans lesquelles la monture inclut un mécanisme rotatif qui maintient chaque lentille à prisme de manière rotative par rapport à la monture, et
le mécanisme rotatif est configuré pour faire tourner chaque lentille à prisme de telle sorte qu'une portion périphérique entière de la lentille à prisme se trouve le long d'un bord d'une portion avant (2002) de la monture ;
la portion avant (2002) inclut une portion avant du côté avant (2002a) et une portion avant du côté arrière (2002b),
la lentille à prisme est située et maintenue dans la portion avant (2002a), et
la portion avant du côté avant (2002a) est configurée pour être rotative par rapport à la portion avant du côté arrière (2002b),
**caractérisées en ce que**
la portion avant du côté avant (2002a) inclut une portion pliée (2010), et la portion pliée (2010) est rotative par rapport à la portion avant du côté arrière (2002b) en ajustant la portion pliée (2010) dans une rainure pourvue dans la portion avant du côté arrière (2002b).

2. Lunettes selon la revendication 1, dans lesquelles l'angle de réfraction de chaque lentille à prisme est compris entre 0,5° et 20°.

3. Lunettes selon la revendication 1 ou 2, dans lesquelles les angles de réfraction des deux lentilles à prisme gauche et droite sont identiques.

4. Lunettes selon l'une quelconque des revendications 1 à 3, dans lesquelles les deux lentilles à prisme gauche et droite augmentent toutes deux en épaisseur depuis une portion inférieure jusqu'à une portion supérieure de chacune d'elles.

5. Lunettes selon l'une quelconque des revendications 1 à 4, dans lesquelles les deux lentilles à prisme gauche et droite augmentent toutes deux en épaisseur depuis une portion supérieure jusqu'à une portion inférieure de chacune d'elles.

6. Lunettes selon l'une quelconque des revendications 1 à 5, dans lesquelles les deux lentilles à prisme gauche et droite augmentent toutes deux en épaisseur depuis un côté droit jusqu'à un côté gauche vu par le porteur quand elles sont utilisées par le porteur.

7. Lunettes selon l'une quelconque des revendications 1 à 6, dans lesquelles les deux lentilles à prisme gauche et droite augmentent toutes deux en épaisseur depuis un côté gauche jusqu'à un côté droit vu par le porteur quand elles sont utilisées par le porteur.

8. Lunettes selon la revendication 1, dans lesquelles le mécanisme rotatif est une lunette rotative (2002a, 2002b, 2011, 2012, 2022).
